(19)

Europäisches Patentamt

European Patent Office

Office européen des brevets

(11) **EP 3 023 884 A1**

(12) **EUROPEAN PATENT APPLICATION**

(43) Date of publication:
    **25.05.2016 Bulletin 2016/21**

(51) Int Cl.:
    **G06F 17/18** (2006.01)       **G06F 17/30** (2006.01)
    **G10L 25/54** (2013.01)

(21) Application number: **14306854.2**

(22) Date of filing: **21.11.2014**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Thomson Licensing
    92130 Issy-les-Moulineaux (FR)**

(72) Inventors:
    • **Duong, Quang Khanh Ngoc
    35576 Cesson-Sévigné (FR)**

    • **Ozerov, Alexey
    35576 Cesson-Sévigné (FR)**
    • **Lefebvre, Frédéric
    35576 Cesson-Sévigné (FR)**

(74) Representative: **Perrot, Sébastien
    Technicolor
    1-5 rue Jeanne d'Arc
    92130 Issy les Moulineaux Cedex (FR)**

(54) **Method and apparatus for generating fingerprint of an audio signal**

(57) Methods and apparatus for generating a fingerprint of an audio signal are disclosed. The method comprises: obtaining a representation of a temporal spectrum of frequencies in the audio signal; detecting peaks in the representation of the audio signal, a peak being defined as a point in the representation which has a higher energy than its neighboring points in a certain range; and generating the fingerprint of the audio signal as a function of the combination of a distribution of positions of the detected peaks along a frequency axis and a distribution of positions of the detected peaks along a time axis. The fingerprint of the disclosure is not only robust to many types of noise, but also robust against time scale modification and frequency shifting.

Fig. 3

EP 3 023 884 A1

## Description

## TECHNICAL FIELD

The present disclosure relates to the digital audio technology, and in particular to a method and an apparatus for generating a fingerprint of an audio signal.

## BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Audio fingerprinting technique can match distorted unlabeled audio snippets to corresponding labeled data. It has wide range of applications in digital audio technologies, such as audio classification, audio retrieval and content synchronization. As an example, a reference written by A. Wang, "An industrial-strength audio search algorithm", Proc. ISMIR 2003 (hereinafter referred to as reference 1) discusses an audio retrieval system, by which a person who is listening to a music (live, or on radio,...) and wants to know more about the singer, name of song, album of the music can simply record a short audio signal and uses it as a query to retrieve metadata information. Another example for the content synchronization is described in a reference written by N. Q. K Duong, C Howson, and Y Legallais, "Fast second screen TV synchronization combining audio fingerprint technique and generalized cross correlation," IEEE International Conference in Consumer Electronics-Berlin (ICCE-Berlin), 2012 (hereinafter referred to as reference 2), where an audio fingerprint can assure fast and accurate synchronization of media components streamed over different networks to different rendering devices for the implementation of emerging second screen TV applications.

There are some known solutions for generating fingerprint in the art. In a reference written by Pedro Cano et al, "a review of audio fingerprinting", Journal of VLSI Signal Processing 41, 271-284, 2005 (hereinafter referred to as reference 3), several fingerprinting technologies were introduced. According to the reference 3, basically an audio signal will be subject to a preprocessing, a framing & overlap, a transform, a feature extract and a post-processing by a front end block and then the output is subject to a fingerprint modeling block to generate a fingerprint of the audio signal.

The above mentioned reference 1 also discusses the generation of an audio fingerprint. In the approach of the reference 1, locations of pairs of energy peaks in the audio spectrogram (i.e. the time-frequency representation of an audio signal) are encoded as fingerprint. In a reference written by J. Haitsma and T. Kalker, "A highly robust audio fingerprinting system", Proc. ISMIR 2002 (hereinafter referred to as reference 4), energy differences between neighboring time-frequency point in the spectrogram are bit-quantized to generate signature.

Some known fingerprint approaches considered spectrogram as an image and applied computer vision techniques to this spectral image for designing fingerprint. For examples, a reference written by S. Baluja and M. Covell, "Waveprint: Efficient wavelet-based audio fingerprinting," Patent recognition, 2008 (hereinafter referred to as reference 5) proposes to apply wavelet transform to the spectral images and designed Min-Hash signature based on sign of the top wavelet coefficients. In the algorithm provided by a reference written by K. Behun, "Image features in music style recognition", Proc. CESCG 2013 (hereinafter referred to as reference 6), the image based feature SIFT is computed and the histogram of SIFT (a.k.a. the bag-of-word (BoW) feature) is taken as signature. A reference written by M. Riley et al., "A text retrieval approach to content-based audio", Proc. ISMIR 2008 (hereinafter referred to as reference 7) provides an algorithm to use Bag-of-Audio-Word (BoA) for content-based audio retrieval. A reference written by S. Pancoast and M. Akbacak, " Bag-of-Audio-Words Approach for Multimedia Event Classification," Proc. Interspeech 2012 (hereinafter referred to as reference 8) proposes to use BoA for audio event classification.

However, most of the above known fingerprint solutions are not able to deal with the big time stretching (which for example happens in the process of changing speed or duration of an audio signal to fit the time in a TV or radio program) and the pitch variation (which happens for example in live concert, covered song) although they are robust against noise and distortions (such as A/D conversion, compression). Thus, the known solutions are not robust to some more challenging applications, such as in recognizing songs in live concert, where the recorded audio query is not exactly a distorted version of the original signal in the database (too much variation either time or frequency scale).

Therefore, there is a need for a method and an apparatus for generating a fingerprint of an audio signal, which is robust to time stretching and pitch variation in audio applications.

## SUMMARY

The present invention disclosure is provided to solve at least one problem of the prior art. The present disclosure will be described in detail with reference to exemplary embodiments. However, the present disclosure is not limited to the exemplary embodiments.

According to a first aspect of the present invention disclosure, there is provided a method for generating a fingerprint of an audio signal. The method comprises obtaining a representation of a temporal spectrum of frequencies in the audio signal; detecting peaks in the representation of the audio signal, a peak being defined as a point in the representation which has a higher energy than its neighboring points in a certain range; and generating the fingerprint of the audio signal as a function of the combination of a distribution of positions of the detected peaks along a frequency axis and a distribution of positions of the detected peaks along a time axis.

In an embodiment, the obtaining of the time-frequency representation of the audio signal comprises segmenting the audio signal into time frames; and transforming the segmented audio signal from a frequency domain to a time-frequency domain to generate a spectrogram of the audio signal comprising linearly-spaced frequencies.

In an embodiment, it further comprises mapping the linearly-spaced frequencies of the spectrogram into P bands of an auditory-motivated frequency scale.

In an embodiment, the distribution of positions of the detected peaks along the frequency axis is represented by a vector of integer numbers $Vf=[V_{f1},...,V_{fF}]T$ as a function of the number of peaks appearing at each frequency bin, wherein a parameter F is the number of frequency bins and T denote vector transpose; and the distribution of positions of the detected peaks along the time axis is represented by a vector of integer numbers $Vt=[V_{t1},...,V_{tN}]T$ as a function of the number of peaks appearing at each time frame bin, where a parameter N is the number of time frame bins.

In an embodiment, the combination is a concatenation of the vector $V_f=[V_{f1},...,V_{fF}]^T$ and the vector $Vt=[V_{t1},...,V_{tN}]^T$ according to the equation below:

$$V=[a*V_f;\ b*V_t],\ \text{wherein a and b are constants.}$$

In an embodiment, it further comprises adapting the parameters F and N according to a requirement on compactness and robustness of the fingerprint.

In an embodiment, it further comprises adapting the constants a and b according to a requirement on robustness to either frequency shifting or time scale shifting of the fingerprint.

In an embodiment, the segmented audio signal is transformed by a Fourier transform.

According to a second aspect of the present invention disclosure, there is provided an apparatus for generating a fingerprint of an audio signal. The apparatus comprises a time-frequency representing unit for obtaining a representation of the temporal spectrum of frequencies in the audio signal; a peak detecting unit for detecting peaks in the representation of the audio signal, a peak being defined as a point in the representation which has a higher energy than its neighboring points in a certain range; a first calculating unit for obtaining a distribution of the positions of the detected peaks along a frequency axis; a second calculating unit for obtaining a distribution of positions of the detected peaks along a time axis; and a combining unit for combining the distribution of positions from the first calculating unit and the second calculating unit to generate the fingerprint of the audio signal.

In an embodiment, the time-frequency representing unit is adapted to segment the audio signal into time frames; and transform the segmented audio signal from frequency domain to time-frequency domain to generate a spectrogram of the audio signal comprising linearly-spaced frequencies.

In an embodiment, the time-frequency representing unit is further adapted to map the linearly-spaced frequencies of the spectrogram into P bands of an auditory-motivated frequency scale.

In an embodiment, the first calculating unit generates a vector of integer numbers $V_f=[V_{f1},...,V_{fF}]^T$ representing the distribution of positions of the detected peaks along the frequency axis as a function of the number of peaks appearing at each frequency bin, wherein a parameter F is the number of frequency bins and T denote vector transpose; and the second calculating unit generates a vector of integer numbers $Vt=[V_{t1},...,V_{tN}]^T$ to represent the distribution of positions of the detected peaks along the time axis as a function of the number of peaks appearing at each time frame bin, where a parameter N is the number of time frame bins.

In an embodiment, the combining unit combines the distribution of positions by a concatenation of the vector $V_f=[V_{f1},...,V_{fF}]^T$ and the vector $Vt=[V_{t1},...,V_{tN}]^T$ according to the equation below:

$$V=[a*V_f;\ b*V_t],\ \text{wherein a and b are constants.}$$

According to a third aspect of the present disclosure, there is provided a computer program product downloadable from a communication network and/or recorded on a medium readable by computer and/or executable by a processor, comprising program code instructions for implementing the steps of a method according to the first aspect of the disclosure.

According to a fourth aspect of the present disclosure, there is provided a non-transitory computer-readable medium comprising a computer program product recorded thereon and capable of being run by a processor, including program code instructions for implementing the steps of a method according to the first aspect of the disclosure.

**BRIEF DESCRIPTION OF THE DRAWINGS**

The above and other objects, features, and advantages of the present disclosure will become apparent from the following descriptions on embodiments of the present disclosure with reference to the drawings, in which:

Figure 1 is a flowchart of a method for generating a fingerprint of an audio signal according to an embodiment of the present disclosure;

Figure 2 is a flowchart of a process for obtaining a spectrogram of the audio signal according to an embodiment of the present disclosure;

Figures 3(a)-3(f) are exemplary diagrams showing the objects resulting from the workflow of the generation of a fingerprint of an audio signal according to an embodiment of the present disclosure;

Figure 4 is a block diagram of an apparatus for generating a fingerprint of an audio signal according to an embodiment of the present disclosure; and

Figure 5 is illustrates an audio retrieval system which can use the fingerprint generated according to the embodiment of the disclosure for retrieving an audio signal.

## DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

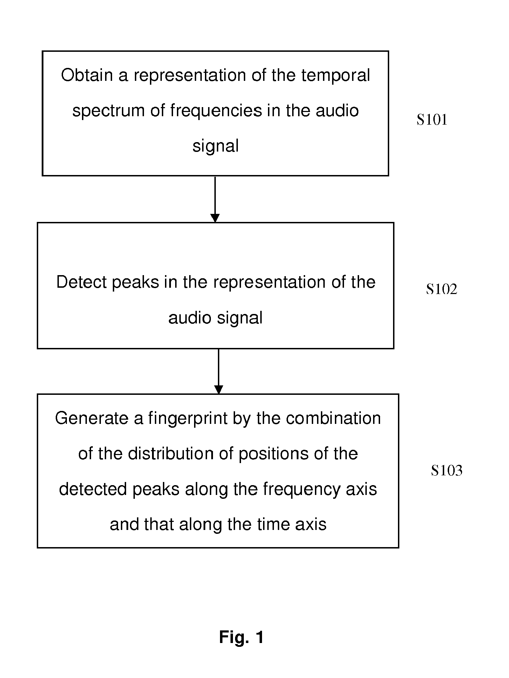

Figure 1 is a flowchart of a method for generating a fingerprint of an audio signal according to an embodiment of the present disclosure.

At step S101, it obtains a representation of a temporal spectrum of frequencies in the audio signal.

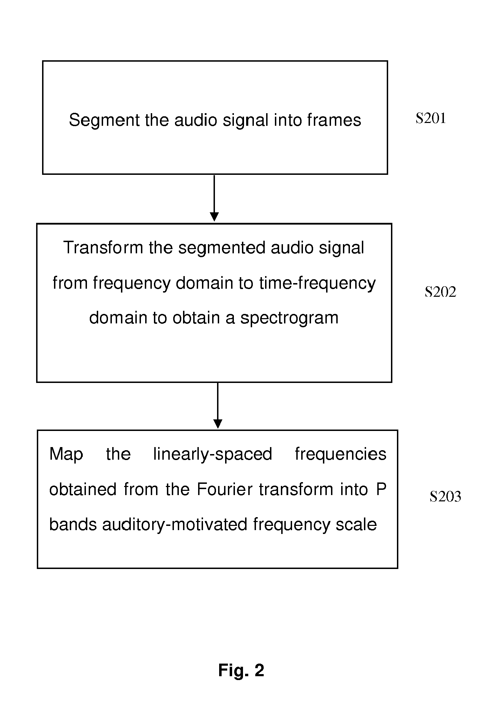

It can be appreciated that the representation can be called the spectrogram of the audio signal, which is a visual representation of the spectrum of frequencies in the audio signal varying with time. The spectrogram is actually the time-frequency representation of the audio signal which is normally viewed as a 2D image. In this case, normally the horizontal axis of the spectrogram represents time, and the vertical axis is frequency. There are known ways in the art to obtain the spectrogram of the audio signal, which can be used in the step S101. Hereinafter, a process for obtaining a spectrogram of the audio signal will be described with reference to Figure 2.

Figure 2 is a flowchart of a process for obtaining a spectrogram of the audio signal according to an embodiment of the present disclosure.

As shown in Figure 2, at step 201, it segments the audio signal into frames.

At step S202, it transforms the segmented audio signal from frequency domain to time-frequency domain to obtain a spectrogram of the audio signal.

The above steps S201 and S202 are for transforming the time domain audio signal into time-frequency domain representation known as spectrogram. In the step S202, a Fourier transform can be used for the transform. In this case, the steps S201 and S202 can be called a short time Fourier transform (STFT). The spectrogram obtained by the STFT comprises linearly-spaced frequencies varying with time. That is, the horizontal axis of the spectrogram is time, and the vertical axis represents linearly-spaced frequencies of the audio signal. The STFT is well-known in the art. No further details will be given in this respect.

As shown in Figure 2, the process for obtaining a spectrogram of the audio signal can further comprise a step S203, where it maps the linearly-spaced frequencies obtained from the STFT into P bands of an auditory-motivated frequency scale. The frequency scale can be Bark, Mel, log scale, or equivalent rectangular bandwidth (ERB) scale. These auditory-motivated frequency scales usually provide finer spectral resolution than the STFT at low frequencies and lower spectral resolution than STFT at high frequencies. Typically P=32, 64,...

The auditory-motivated frequency scales mentioned in the step S203 are well-known in the art. No further details will be given in this respect.

Back to Figure 1, at the next step S102, it detects peaks in the representation, the spectrogram in this case, of the audio signal. Here, a peak is defined as a point in the spectrogram which has a higher energy than its neighboring points in a certain range. In this embodiment, it can be appreciated that the energy is defined as the square magnitude of the STFT coefficient used for the transform.

As an example, it can detect peaks in the spectrogram, which are points having higher energy than its neightbouring points. Please note that the detection of peaks in a spectrogram of an audio signal is known in the art. For example, the reference 1 describes a detection method, which can be used for the step S102. No further details will be given in this respect.

At step S103, it generates a fingerprint of the audio signal as a function of the combination of the distribution of positions of the detected peaks along the frequency axis and those along the time axis.

In an example, the above-mentioned distribution can be represented by a histogram which is a graphical representation of the distribution of the peaks along two axes, each axis being divided into bins.

A detailed description of the generation of a histogram will be provided below.

Histogram of the positions of the detected peaks along the frequency axis can be obtained by counting the number of peaks appearing at each frequency bin f (denoted by $V_f$). This histogram feature can be denoted by a F-dimensional vector of integer numbers $V_f=[V_{f1},...,V_{fF}]^T$, where F is the number of frequency bins and T denote vector transpose. It provides the robustness to time scale modification because intrinsically when time is stretched, the number of peak in each frequency bin is not changed.

Histogram of the positions of the detected peaks along the time axis can be obtained by counting the number of peaks appearing at each time frame bin. This feature can be denoted by a N-dimensional vector of integer numbers $V_t=[V_{t1},...,V_{tN}]^T$, where N is the number of time frame bins. It provides the robustness to frequency shifting effect because intrinsically when pitch is shifted, the number of peak in each time frame bin is not changed.

Note that, the number N depends on both the signal length, and the number of frequency bins F. Given the fixed signal length, N will be higher if F is smaller and vice versa. Thus in a variant dealing mostly with frequency shifting, Vt is advantageously used as a robust fingerprint instead of Vf, and the smaller value of N, the more compact the fingerprint is. In another variant dealing mostly with time-scale distortion, Vf is advantageously used instead of Vt, and the smaller value of F, the more compact fingerprint is. Thus the fingerprint of the audio signal can be generated by a combination of the histogram along frequency axis and that along time axis of positions of the detected peaks. For example, the combination of both histograms can be built as below

$$V=[a*V_f; b*V_t] \quad (1)$$

In this example, the generated fingerprint is the concatenation of $V_f$ and $V_t$, which resulting in (F+N)-dimensional vector of integers. Note that the constant a and b in the equation (1) allow tuning the contribution (weight) between the two histogram in the final fingerprint signature. In applications where there is no scale shifting or the scale shifting is very small, it can set a=0 so as to reduce the fingerprint size, make the signature very robust to pitch variation, and fasten the matching process. Similarly, in applications where the frequency shifting is not concerned, it can set b=0 so that the signature is very robust to time stretch.

In an embodiment of the disclosure, a weighting scheme can be built for different peak locations, for example, based on prior knowledge about the important regions. In general case, one can set a=b=1, the number of frequency bins can be in the order of 128 (auditory-motivated scale), and the number of time frames N can be in the order of 100. Another way to balance the contribution of Vf and Vt is to set a=N/(F+N) and b=F/(N+F). For example, in case the query length is 4 seconds, the frameshift in the short time Fourier transform (STFT) is 20 ms.

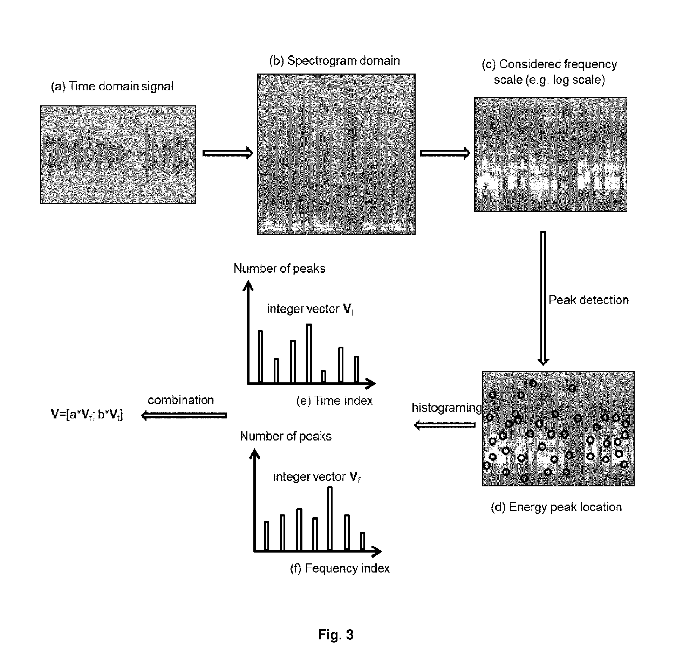

Figures 3(a)-3(f) are exemplary diagrams showing the objects resulting from the workflow of the generation of a fingerprint of an audio signal according to an embodiment of the present disclosure.

Figure 3(a) shows an audio signal in time domain. Figure 3(b) shows the spectrogram of the audio signal, which is obtained for example by the above-described steps S201 and S202. Figure 3(c) illustrates the spectrogram after mapping the linearly-spaced frequencies obtained from the STFT into P bands auditory-motivated frequency scale.

Figure 3(d) is an exemplary diagram showing the detected peaks in the spectrogram of the audio signal.

Figure 3(e) illustrates an example of histogram of the positions of the detected peaks along the time axis, which is obtained by counting the number of peaks appearing at each time frame bin. The output is a vector of integer numbers $V_t$.

Figure 3(f) illustrates an example of histogram of the positions of the detected peaks along the frequency axis, which is obtained by counting the number of peaks appearing at each frequency bin. The output is a vector of integer numbers $V_f$. Finally as shown in Figure 3(f), a fingerprint of the audio signal can be generated by the concatenation of $V_f$ and $V_t$. The generated fingerprint is represented by $V=[a*V_f; b*V_t]$.

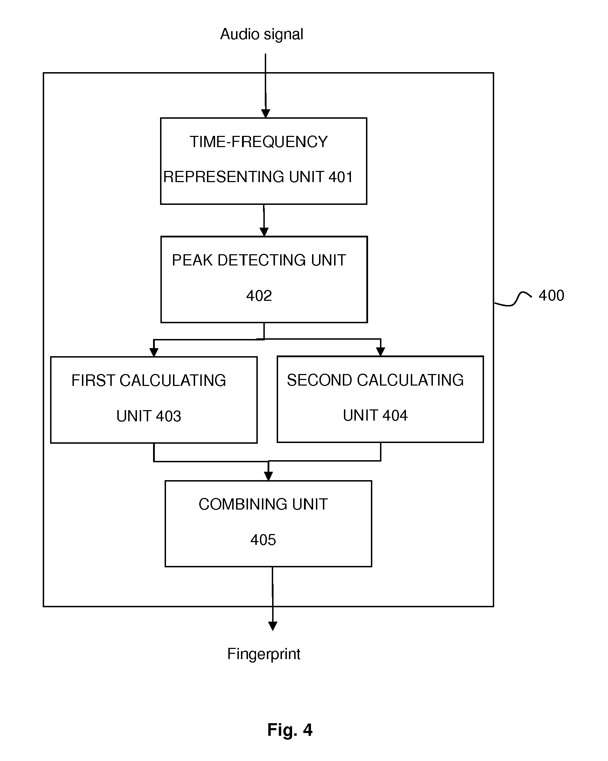

Figure 4 is a block diagram of an apparatus for generating a fingerprint of an audio signal according to an embodiment of the present disclosure.

As shown in Figure 4, the input of the apparatus 400 is an audio signal.

The apparatus 400 comprises a time-frequency representing unit 401 for obtaining a representation of the spectrum of frequencies in the audio signal varying with time. A spectrogram of the audio signal can be obtained according to the process described above.

The apparatus 400 further comprises a peak detecting unit 402 for detecting peaks in the representation of the audio signal.

The apparatus 400 further comprises a first calculating unit 403 for obtaining the distribution of the positions of the detected peaks along the frequency axis. As described above, the distribution can be represented by a histogram, which can be obtained by counting the number of peaks appearing at each frequency bin.

The apparatus 400 further comprises a second calculating unit 404 for obtaining the distribution of positions of the detected peaks along the time axis. As described above, the distribution can be represented by a histogram, which can be obtained by counting the number of peaks appearing at each time frame bin.

The apparatus 400 further comprises a combining unit 405 for combining the histograms from the first calculating unit 403 and the second calculating unit 404 to generate the fingerprint of the audio signal. The combination can be the concatenation of both histograms, which resulting in a vector of integers as the fingerprint of the audio signal.

The output of the apparatus 400 is a fingerprint of the audio signal. As described above, in an embodiment, it is a vector of integers.

According to the embodiments of the present disclosure, the peak locations, which are coordinates of peaks in time and frequency axes of the spectral image representation, are very robust to background noise due to the fact that background noise can only change the energy level in most cases, instead of the position of the local maximum energy point.

The fingerprint generated according to the embodiments of the disclosure is a vector of integer number. It can be applied to the application of similarity search, exhaustive search or Approximate Nearest Neighbor (ANN) search such as LSH, Hamming embedding, product quantization (PQ) code.

The fingerprint according to the embodiments of the disclosure is not only robust to many types of noise, but also robust against time scale modification and frequency shifting. The fingerprint is compact and therefore applicative for large-scale search. It therefore can bring wide range of applications in both audio retrieval and content synchronization.

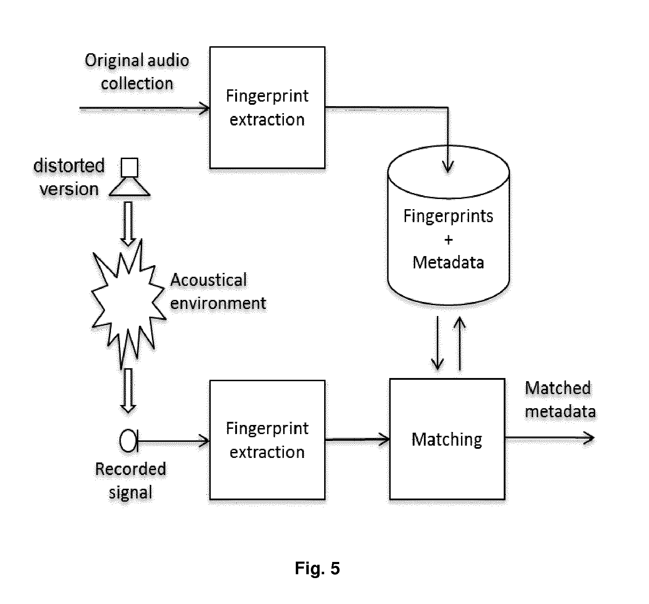

Figure 5 is illustrates an audio retrieval system which can use the fingerprint generated according to the embodiment of the disclosure for retrieving an audio signal.

As shown in Figure 5, the audio retrieval contains two major parts, one is fingerprint extraction and the other is fingerprint matching. In the fingerprint extraction, a fingerprint is extracted upon a query, for example, from a recorded signal. The fingerprint matching will compare the extracted fingerprint with a fingerprint of an available signal, for example, the original audio collection. The fingerprint of the available signal can be pre-computed and indexed in a database, as similarity search, for retrieval purpose. Detailed information of the matching and retrieval process will not be provided in the disclosure. It only needs to mention here that a robust and compact audio signature associated to each piece (segment) of audio signal is important for purpose of audio signal retrieval.

As described above, the fingerprint generated according to the embodiment of the disclosure is robust to time stretching and pitch variation in audio applications. In the known arts introduced in the background part, features used in the fingerprint of the reference 1 is robust to the background noise while the resulted fingerprint is not able to deal with the big time stretching and the pitch variation. The bag-of-word (BoW) feature used in the fingerprint of the references 6 and 7 can bring some benefits to those major distortions such as either time scale modification and or pitch shifting. The audio fingerprint according to the embodiment of the disclosure is proposed considering both features discussed in the references 1 and 6, 7. Therefore, the proposed fingerprint can be used in more challenging applications such as in recognizing songs in live concert where the recorded audio query is not exactly a distorted version of the original signal in the database (too much variation either time or frequency scale). In addition, since the fingerprint is a vector of integer numbers, it is very easily intergrated to any search well-established engine.

It is to be understood that the present disclosure may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. A method for generating a fingerprint of an audio signal, comprising:

   obtaining (S101) a representation of a temporal spectrum of frequencies in the audio signal;
   detecting (S102) peaks in the representation of the audio signal, a peak being defined as a point in the representation which has a higher energy than its neighboring points in a certain range; and
   generating (S103) the fingerprint of the audio signal as a function of the combination of a distribution of positions of the detected peaks along a frequency axis and a distribution of positions of the detected peaks along a time axis.

2. The method according to claim 1, wherein the obtaining of the representation of the spectrum of frequencies in the audio signal comprises:

   segmenting (S201) the audio signal into time frames; and
   transforming (S202) the segmented audio signal from a frequency domain to a time-frequency domain to generate a spectrogram of the audio signal comprising linearly-spaced frequencies.

3. The method according to claim 2, further comprising:

    mapping (S203) the linearly-spaced frequencies of the spectrogram into P bands of an auditory-motivated frequency scale.

4. The method according to claim 1, wherein
    the distribution of positions of the detected peaks along the frequency axis is represented by a vector of integer numbers $V_f=[V_{f1},...,V_{fF}]^T$ as a function of the number of peaks appearing at each frequency bin, wherein a parameter F is the number of frequency bins and T denote vector transpose; and
    the distribution of positions of the detected peaks along the time axis is represented by a vector of integer numbers $Vt=[V_{t1},...,V_{tN}]^T$ as a function of the number of peaks appearing at each time frame bin, where a parameter N is the number of time frame bins.

5. The method according to claim 4, wherein the combination is a concatenation of the vector $V_f=[V_{f1},...,V_{fF}]^T$ and the vector $Vt=[V_{t1},...,V_{tN}]^T$ according to the equation below:

$$V=[a*V_f;\ b*V_t]$$

    wherein a and b are constants.

6. The method according to claim 4, further comprising adapting the parameters F and N according to a requirement on compactness and robustness of the fingerprint.

7. The method according to claim 5, further comprising adapting the constants a and b according to a requirement on robustness to either frequency shifting or time scale shifting of the fingerprint.

8. The method according to claim 2, wherein the segmented audio signal is transformed by a Fourier transform.

9. An apparatus (400) for generating a fingerprint of an audio signal, comprising:

    a time-frequency representing unit (401) for obtaining a representation of the temporal spectrum of frequencies in the audio signal;
    a peak detecting unit (402) for detecting peaks in the representation of the audio signal, a peak being defined as a point in the representation which has a higher energy than its neighboring points in a certain range;
    a first calculating unit (403) for obtaining a distribution of the positions of the detected peaks along a frequency axis;
    a second calculating unit (404) for obtaining a distribution of positions of the detected peaks along a time axis; and
    a combining unit (405) for combining the distribution of positions from the first calculating unit (403) and the second calculating unit (404) to generate the fingerprint of the audio signal.

10. The apparatus (400) according to claim 9, wherein the time-frequency representing unit (401) is adapted to:

    segment the audio signal into time frames; and
    transform the segmented audio signal from frequency domain to time-frequency domain to generate a spectrogram of the audio signal comprising linearly-spaced frequencies.

11. The apparatus (400) according to claim 10, wherein the time-frequency representing unit (401) is further adapted to:

    map the linearly-spaced frequencies of the spectrogram into P bands of an auditory-motivated frequency scale.

12. The apparatus (400) according to claim 9, wherein the first calculating unit (403) generates a vector of integer numbers $V_f=[V_{f1},...,V_{fF}]^T$ representing the distribution of positions of the detected peaks along the frequency axis as a function of the number of peaks appearing at each frequency bin, wherein a parameter F is the number of frequency bins and T denote vector transpose; and
    the second calculating unit (404) generates a vector of integer numbers $Vt=[V_{t1},...,V_{tN}]^T$ representing the distribution of positions of the detected peaks along the time axis as a function of the number of peaks appearing at each time frame bin, where a parameter N is the number of time frame bins.

13. The apparatus (400) according to claim 12, wherein. wherein the combining unit (405) combines the distribution of positions by a concatenation of the vector $V_f=[V_{f1},...,V_{fF}]^T$ and the vector $Vt=[V_{t1},...,V_{tN}]^T$ according to the equation below:

$$V=[a*V_f;\ b*V_t]$$

    wherein a and b are constants.

14. Computer program product downloadable from a communication network and/or recorded on a medium readable by computer and/or executable by a processor, comprising program code instructions for implementing the steps of a method according to at least one of claims 1 to 8.

15. Non-transitory computer-readable medium comprising a computer program product recorded thereon and capable of being run by a processor, including program code instructions for implementing the steps of a method according to at least one of claims 1 to 8.

Obtain a representation of the temporal
spectrum of frequencies in the audio
signal

S101

Detect peaks in the representation of the
audio signal

S102

Generate a fingerprint by the combination
of the distribution of positions of the
detected peaks along the frequency axis
and that along the time axis

S103

**Fig. 1**

Segment the audio signal into frames

S201

Transform the segmented audio signal from frequency domain to time-frequency domain to obtain a spectrogram

S202

Map the linearly-spaced frequencies obtained from the Fourier transform into P bands auditory-motivated frequency scale

S203

**Fig. 2**

(a) Time domain signal

(b) Spectrogram domain

(c) Considered frequency scale (e.g. log scale)

Peak detection

Number of peaks

integer vector **V**$_t$

(e) Time index

combination

**V**=[a\***V**$_f$; b\***V**$_t$]

histograming

Number of peaks

integer vector **V**$_f$

(f) Fequency index

(d) Energy peak location

Fig. 3

Audio signal

TIME-FREQUENCY

REPRESENTING UNIT 401

PEAK DETECTING UNIT

402

400

FIRST CALCULATING

UNIT 403

SECOND CALCULATING

UNIT 404

COMBINING UNIT

405

Fingerprint

**Fig. 4**

**Fig. 5**

Europäisches
Patentamt

European
Patent Office

Office européen
des brevets

# EUROPEAN SEARCH REPORT

Application Number

EP 14 30 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REINHARD SONNLEITNER ET AL: "QUAD-BASED AUDIO FINGERPRINTING ROBUST TO TIME AND FREQUENCY SCALING", PROC. OF THE 17 TH INT. CONFERENCE ON DIGITAL AUDIO EFFECTS (DAFX-14), 1 September 2014 (2014-09-01), pages 1-8, XP055193704, Erlangen, Germany * abstract * * sections 1, 4.1, 4.2 * ----- | 1-15 | INV. G06F17/18 G06F17/30 G10L25/54 |
| A | SIX JOREN ET AL: "PANAKO -A SCALABLE ACOUSTIC FINGERPRINTING SYSTEM HANDLING TIME-SCALE AND PITCH MODIFICATION", 15TH INTERNATIONAL SOCIETY FOR MUSIC INFORMATION RETRIEVAL CONFERENCE (ISMIR 2014), 27 October 2014 (2014-10-27), pages 259-264, XP055193706, * abstract * * section 2 * ----- | 1-15 | |
| A | US 2005/177372 A1 (WANG AVERY L [US] ET AL WANG AVERY LI-CHUN [US] ET AL) 11 August 2005 (2005-08-11) * paragraphs [0020], [0026] - paragraph [0030] * * abstract * ----- | 1-15 | TECHNICAL FIELDS SEARCHED (IPC) G06F G10L |

-/--

The present search report has been drawn up for all claims

| Place of search | Date of completion of the search | Examiner |
|---|---|---|
| Berlin | 5 June 2015 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                  

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 14 30 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BILEI ZHU ET AL: "A novel audio fingerprinting method robust to time scale modification and pitch shifting", PROCEEDINGS OF THE INTERNATIONAL CONFERENCE ON MULTIMEDIA, MM '10, 1 January 2010 (2010-01-01), page 987, XP055049351, New York, New York, USA DOI: 10.1145/1873951.1874130 ISBN: 978-1-60-558933-6 * abstract * * sections 1, 2.1, 2.2 * ----- | 1-15 | |
| A | US 2009/129647 A1 (DIMITROVA NEVENKA [US] ET AL DIMIROVA NEVENKA [US] ET AL) 21 May 2009 (2009-05-21) * abstract; figures 13-15 * * paragraphs [0046], [0052] - [0054] * ----- | 1-15 | |
| A | Dan Stowell ET AL: "Birdsong and C4DM: A survey of UK birdsong and machine recognition for music researchers", , 28 July 2011 (2011-07-28), pages 1-23, XP055193735, Retrieved from the Internet: URL:http://citeseerx.ist.psu.edu/viewdoc/download?doi=10.1.1.308.395&rep=rep1&type=pdf [retrieved on 2015-06-04] * section 2.3, paragraph 1 * ----- | 1-15 | TECHNICAL FIELDS SEARCHED (IPC) |

The present search report has been drawn up for all claims

| Place of search | Date of completion of the search | Examiner |
|---|---|---|
| Berlin | 5 June 2015 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6854

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2015

| Patent document cited in search report | | Publication date | Patent family member(s) | | Publication date |
|---|---|---|---|---|---|
| US 2005177372 | A1 | 11-08-2005 | AT | 405924 T | 15-09-2008 |
| | | | AU | 2003230993 A1 | 10-11-2003 |
| | | | BR | 0309598 A | 09-02-2005 |
| | | | CA | 2483104 A1 | 06-11-2003 |
| | | | CN | 1647160 A | 27-07-2005 |
| | | | DK | 1504445 T3 | 01-12-2008 |
| | | | EP | 1504445 A1 | 09-02-2005 |
| | | | ES | 2312772 T3 | 01-03-2009 |
| | | | HK | 1073382 A1 | 19-12-2008 |
| | | | JP | 4425126 B2 | 03-03-2010 |
| | | | JP | 2005524108 A | 11-08-2005 |
| | | | KR | 20050010763 A | 28-01-2005 |
| | | | PT | 1504445 E | 24-11-2008 |
| | | | TW | I269196 B | 21-12-2006 |
| | | | US | 2005177372 A1 | 11-08-2005 |
| | | | WO | 03091990 A1 | 06-11-2003 |
| US 2009129647 | A1 | 21-05-2009 | CN | 101401101 A | 01-04-2009 |
| | | | EP | 1999663 A2 | 10-12-2008 |
| | | | JP | 5297207 B2 | 25-09-2013 |
| | | | JP | 2009529723 A | 20-08-2009 |
| | | | RU | 2008140168 A | 20-04-2010 |
| | | | US | 2009129647 A1 | 21-05-2009 |
| | | | WO | 2007105150 A2 | 20-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. WANG.** An industrial-strength audio search algorithm. *Proc. ISMIR,* 2003
- **N. Q. K DUONG ; C HOWSON ; Y LEGALLAIS.** Fast second screen TV synchronization combining audio fingerprint technique and generalized cross correlation. *IEEE International Conference in Consumer Electronics-Berlin (ICCE-Berlin),* 2012
- **PEDRO CANO et al.** a review of audio fingerprinting. *Journal of VLSI Signal Processing,* 2005, vol. 41, 271-284
- **J. HAITSMA ; T. KALKER.** A highly robust audio fingerprinting system. *Proc. ISMIR,* 2002

- **S. BALUJA ; M. COVELL.** Waveprint: Efficient wavelet-based audio fingerprinting. *Patent recognition,* 2008
- **K. BEHUN.** Image features in music style recognition. *Proc. CESCG,* 2013
- **M. RILEY et al.** A text retrieval approach to content-based audio. *Proc. ISMIR,* 2008
- **S. PANCOAST ; M. AKBACAK.** Bag-of-Audio-Words Approach for Multimedia Event Classification. *Proc. Interspeech,* 2012